# EUROPEAN PATENT SPECIFICATION

(11) **EP 2 492 523 B1**
(45) Date of publication and mention of the grant of the patent: **09.07.2014**
(21) Application number: 11156079.3
(22) Date of filing: 25.02.2011
(51) Int. Cl.: F16B 39/34, F16B 33/00

(54) **Anti-vibration bolt**
Antivibrationsbolzen
Boulon anti-vibration

(43) Date of publication of application: 29.08.2012
(73) Proprietor: Kunshan Rapidfix Fasteners Co., Ltd, Kunshan City Jiangsu (CN)
(72) Inventor: Grimm, Henning, 53547, Hochscheid (DE); Harvey, Randall T, Charlotte, NC (US)
(74) Representative: Rutt, Jason Edward

(56) References cited:
- EP-A1- 0 448 361
- DE-U1-202009 005 363
- GB-A- 1 004 810
- GB-A- 1 021 247
- US-A- 2 913 031
- US-A1- 2004 258 501

## Description

### FIELD OF THE INVENTION

The present invention relates to an anti-vibration bolt, particularly relates to an anti-vibration bolt which can counteract vibrations.

### BACKGROUND OF THE INVENTION

Bolts are often used to close outlets for draining or filling of oil or other fluids in fluid tanks, for containing lubrication fluid or for moving parts such as machines, generators, gear boxes or engines. The bolts work in a way such that they engage the internal thread of fluid outlet opening on various fluid tanks and thereby close the opening. However, the limitation is that bolts per se are not very effective in providing sealing capabilities. In such cases bolts are commonly used to hold a rubber seal in place by crushing the rubber seal between the bolt and the fluid outlet surface. However, the limitation is still that the bolts are mounted to parts of moving equipment that is subjected to vibrational forces, which over time can lead to the bolt losing its prevailing torque. Bolts will inevitably loosen over time. When the bolts become loose, any seals fixed between the bolt and fluid outlet will also loosen and become prone to fluid leakage. In some cases, insufficiently tightened bolts can vibrate loose and lead to sudden loss of the bolt, sudden loss of the seal and then sudden loss of fluid. The consequences of losing the bolt, losing the seal and the resulting fluid leakage as a result of vibration can be serious and cause damage to equipment of various degrees, depending on the application.

A number of limited solutions to this problem have been disclosed in the prior art. US2913031 discloses a self locking screw having a slot formed longitudinally in the shank of the screw and an insert body seated within the slot. EP0448361 discloses a threaded plug with strips of soft plastic material being moulded onto the thread of the plug in a longitudinal direction. GB1021247 discloses a self-locking screw threaded fastener incorporating a deformable synthetic plastic insert body. GB1004810 discloses a self locking screw-threaded fastening device incorporating an elongated insert of elastomeric material inserted longitudinally. DE 2009 005363 discloses a bolt with at least one sealing gasket being provided around the circumference of the threaded portion. Finally US 2004/0258501 discloses an anti-vibration mechanism for lock nuts where an o-ring sealing gasket is provided around the circumference of the threaded portion.

There exists a need for a simple and inexpensive improved bolt that will prevent the loosening of the bolt.

### SUMMARY OF THE INVENTION

An object of the present invention is to provide an anti-vibration bolt which can reduce torque loss and self-loosening caused by vibration.

Another object of the present invention is to provide an anti-vibration bolt which can reduce torque loss and self-loosening caused by vibration, without the use of adhesives and sealant-like materials.

One aspect of the present invention is to provide an anti-vibration bolt which comprises a body portion, said body portion comprising a thread portion, a first recess, said first recess being set on the thread portion and running along threads of the thread portion, and a first sealing gasket, said first sealing gasket being disposed in the first recess.

Another aspect of the present invention is to provide an anti-vibration bolt which comprises a body portion, said body portion comprising a thread portion, a cross-wise recess is defined on the thread portion and runs along threads of the thread portion, and a cross-wise sealing gasket is disposed in said cross-wise recess.

Another aspect of the present invention is to provide an anti-vibration bolt which comprises a body portion, said body portion comprising a thread portion with threads on at least a portion of body portion, at least one recess defined on the thread portion, said at least one recess intersecting a cross-section of the body portion, and at least one sealing means disposed in the at least one recess.

According to the present invention, the gasket is molded into the thread. The gasket can realize a vibration-stopping function in case installation technicians neglect to properly fix or torque the bolt until the end.

These and other advantageous aspects of the subject invention are described further below.

### DESCRIPTION OF THE DRAWINGS

FIG. 1A shows a perspective view of an anti-vibration bolt according to a first embodiment of the present invention.
FIG. 1B shows a top view of the anti-vibration bolt shown in FIG. 1A.
FIG. 1C shows a bottom view of the anti-vibration bolt as shown in FIG.1A.
FIG. 1D shows a front view of the anti-vibration bolt shown in FIG.1A.
FIG. 1E shows a back view of the anti-vibration bolt shown in FIG.1A.
FIG. 1F shows a left view of the bolt shown in FIG.1A.
FIG. 1G shows a right view of the anti-vibration bolt shown in FIG.1A.
FIG. 2A shows a perspective view of an anti-vibration bolt.
FIG. 2B shows a top view of the anti-vibration bolt shown in FIG.2A.
FIG. 2C shows a bottom view of the anti-vibration bolt as shown in FIG.2A.
FIG. 2D shows a front view of the anti-vibration bolt shown in FIG.2A.
FIG. 2E shows a back view of the anti-vibration bolt shown in FIG.2A.
FIG. 2F shows a left view of the anti-vibration bolt shown in FIG.2A.
FIG. 2G shows a right view of the anti-vibration bolt shown in FIG.2A

### DESCRIPTION OF THE ILLUSTRATIVE EMBODIMENTS

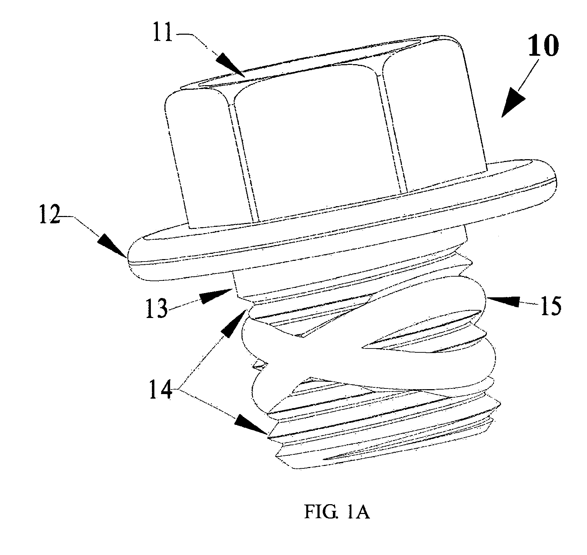

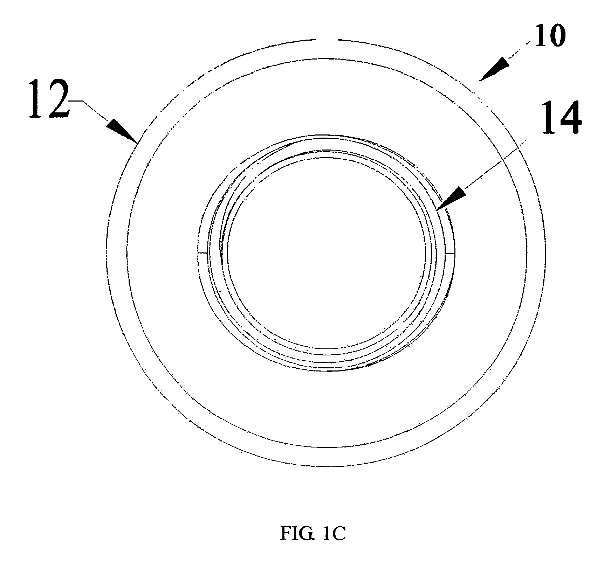

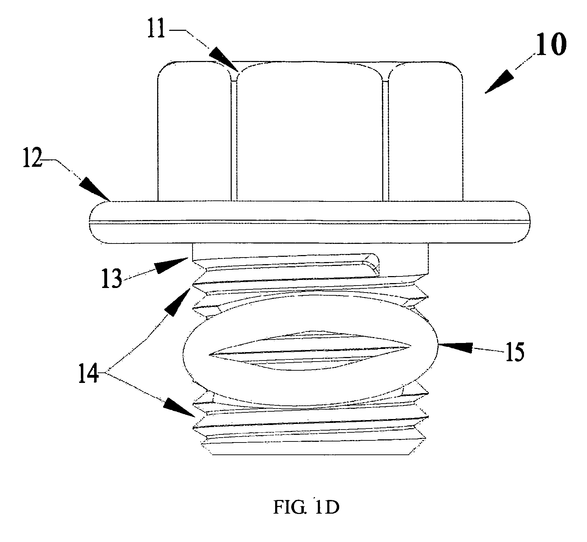

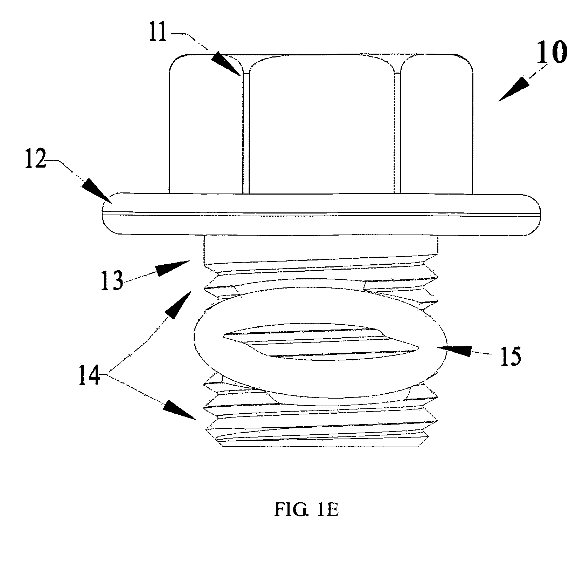

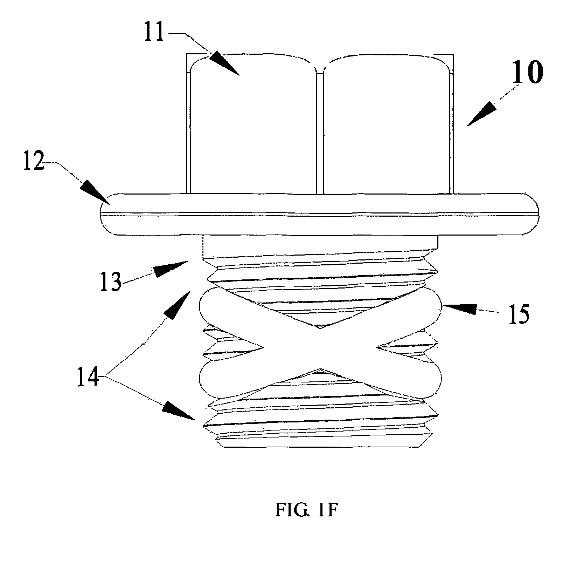

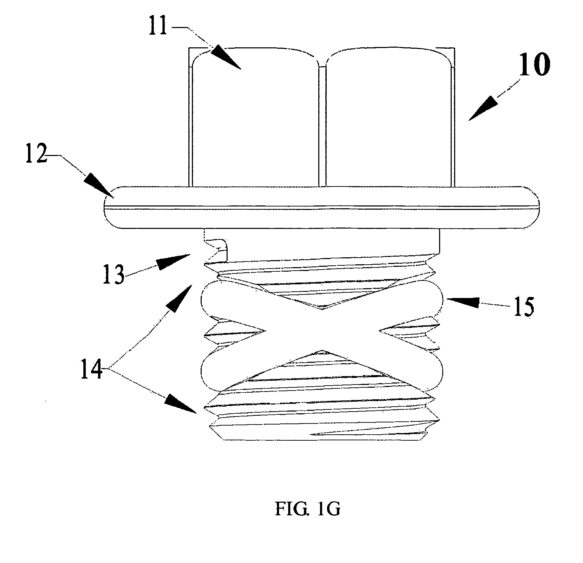

Turning to the figures, FIGS. 1A-1G show the anti-vibration bolt 10 of the first embodiment of the present invention. The anti-vibration bolt 10 comprises a body portion 13 and a head portion 11 connecting with the body portion 13. A flange head 12 is located between the body portion 13 and the head portion 11. The head portion 11, the flange head 12, and the body portion 13 may be a single, contiguously formed metal anti-vibration bolt formed from any suitable polymers, metal or metal alloys. The body portion 13 has a thread portion with thread 14 defined thereon. A cross-wise recess (hidden) is set on the thread portion, and a cross-wise sealing gasket 15 is disposed in the cross-wise recess.

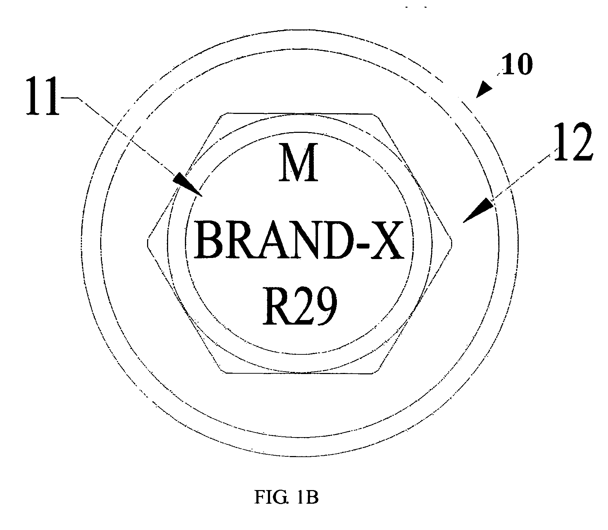

FIG. 1B shows a top view of the anti-vibration bolt 10. The top surface of the head portion 11 of the anti-vibration bolt has a marking portion, such as "M BRAND-X R29" shown in Fig. 1B. Specifically, the marking portion follows an alphanumerical system, which allows a user to identify which bolt type to fit to a specific vehicle. For example, there is currently F bolts, R bolts and S bolts which denote that the bolt design is an upgrade from previously existing F, R bolt and S bolt types. Although FIG.1B shows that the marking portion is set on the top surface of the head portion 11, those skilled in the art will appreciate that the marking portion can be set on any user-friend surface of the heading portion 11.

The cross-wise recess runs along threads 14 of the thread portion, and is formed by two grooves which are cross connected at two connection points. The shape of the cross-wise sealing gasket 15 corresponds to the cross-wise recess such that the cross-wise sealing gasket 15 can be matched in the recess. Each groove of the cross-wise recess is an o-ring having a circular, oval, unique exterior surface. In another embodiment, each groove of the cross-wise recess can have flat, planar surfaces defined thereon such as a "washer-like" gasket.

The cross-wise sealing gasket 15 is flush, below, or protruded with the threads 14, or protrude partially past the threads, to form a seal when the anti-vibration bolt is inserted into a threaded socket. Alternatively, the sealing function can be realized by an expandable sealing gasket which can expand upon contact with lubricants, fluids, heat, compression, and the like. Alternatively, the sealing function can be realized by a combination of o-ring compression, material heat expansion, and the like. In an embodiment, the gasket is made of a material that expands upon being heated. In another embodiment, the material irreversibly expands upon being subjected to a petroleum-based product or being subjected to a heated environment, or both. Those skilled in the art will appreciate that the gasket can be made of various different materials. It can also take several different configurations depending on the intended use and size of the anti-vibration bolt.

Please note that the dimension of the recess and gasket as shown in Figs 1A-1G is only for illustration purposes and other dimension may be used. Although Figs. 1A-1G show that the cross-wise recess is formed by two grooves which are cross connected at two connection points, those skilled in the art will appreciate that the cross-wise recess can be formed by more than two connected grooves, and the number of the connection point can be freely adopted. Further, each groove of the cross-wise recess can be orientated in any direction. In one embodiment, at least one groove of the cross-wise recess intersects the cross-section of the body portion.

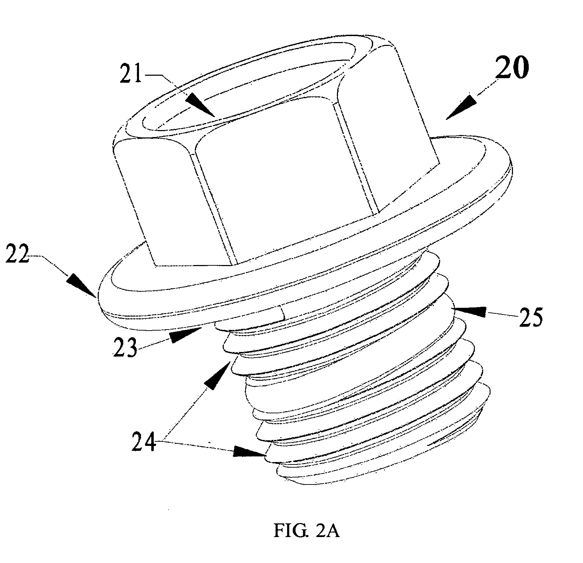

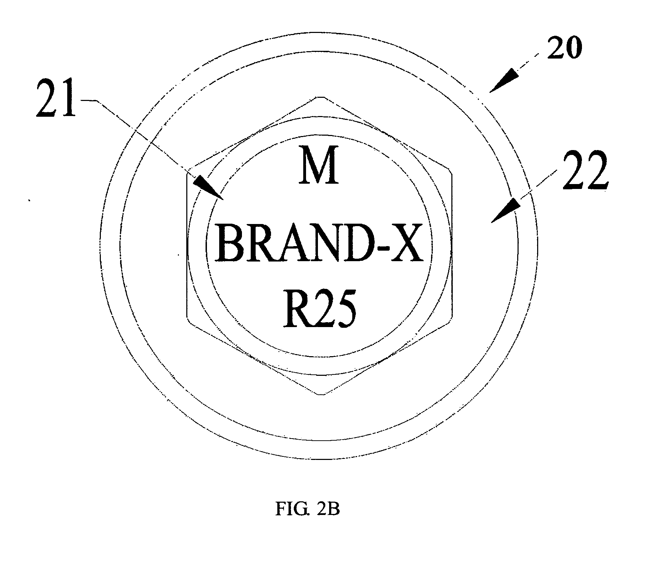

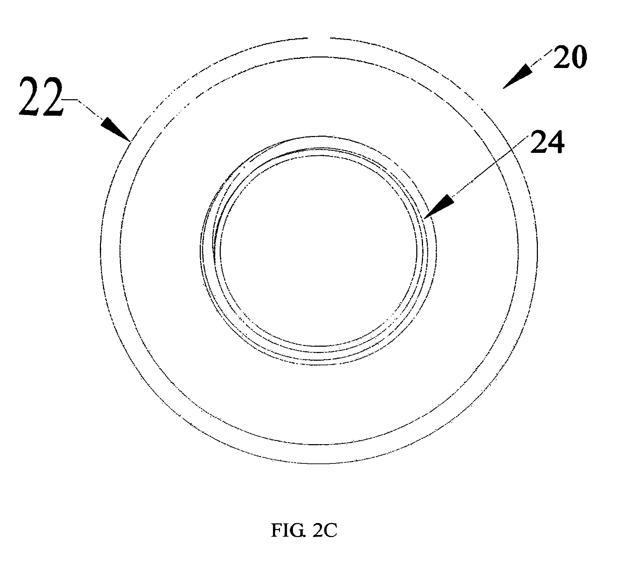

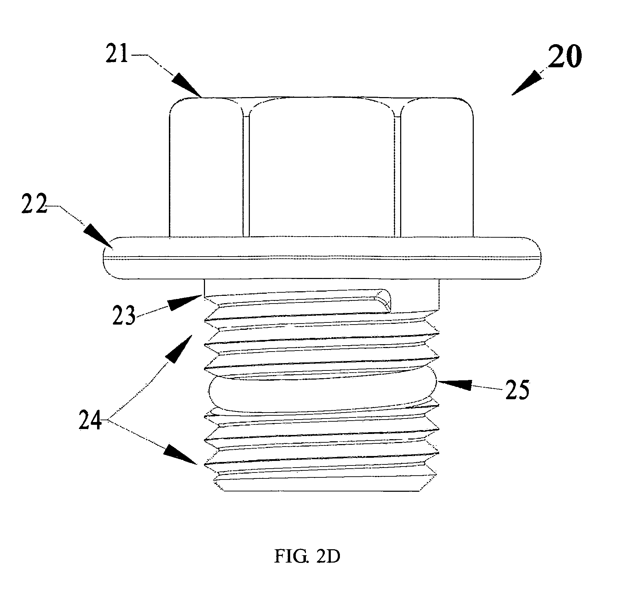

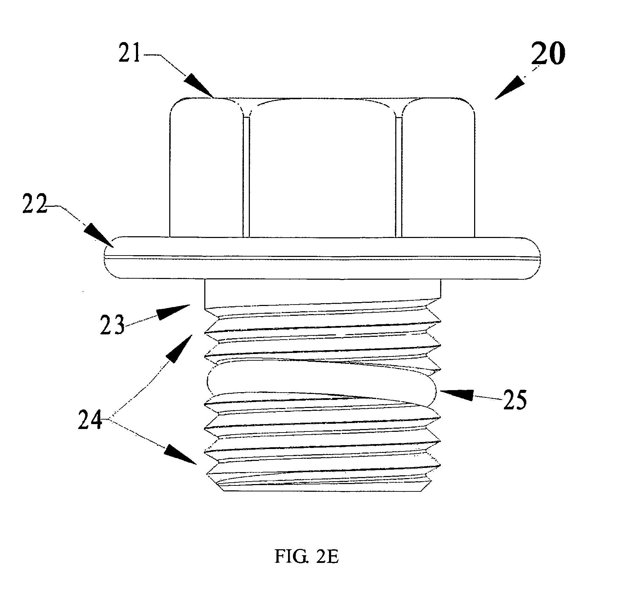

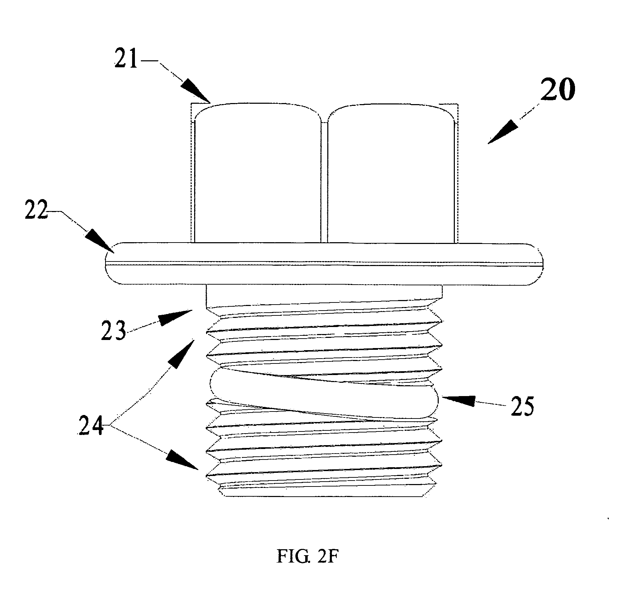

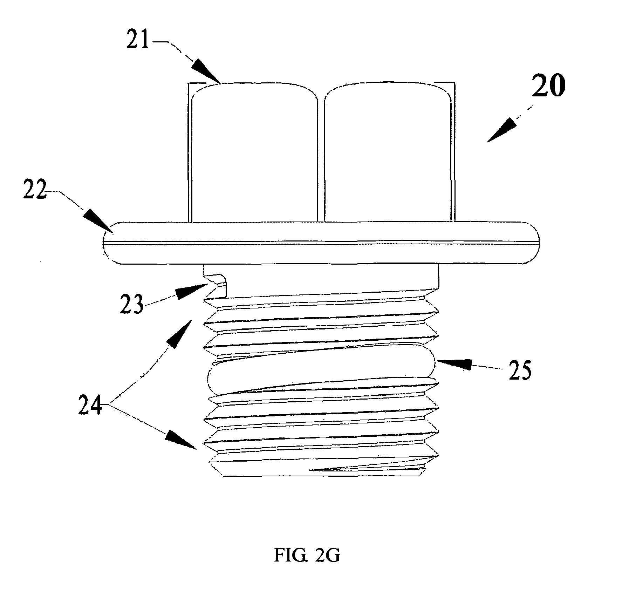

FIGS. 2A-2G show the anti-vibration bolt 20 of the second embodiment of the present invention. The anti-vibration bolt 20 comprises a head portion 21, a flange head 22 and a body portion 23. The structure of the second embodiment is similar to the first embodiment except for the recess. In the second embodiment, the recess for accommodating the sealing gasket 25 is formed by a single groove which is set on the thread portion of the anti-vibration bolt. The single groove runs along threads 24 of the thread body. The sealing gasket 25 is disposed in the single groove. In one embodiment, the single groove intersects the cross-section of the body portion.

The grooves in the present invention are grooves with rounded contours. These particular grooves are especially adapted for holding an o-ring type sealing gasket. Naturally, the contours of the groove may be square, spear, curved, hybrid to better accommodate a various sealing gasket configurations. Those skilled in the art will easily adapt the groove to accommodate the specific dimensions of the sealing gasket used. The depth of groove can also be designed according to the sealing gasket to be used. If the sealing function is realized by the elastic deformation or compression of sealing gaskets, the depth of groove can be slightly less than the thickness of the sealing gasket 15, 25, so that a part of the sealing gasket protrudes from the threads 14, 24 of the body portion 13, 23. If the sealing function is realized by the explanation of the sealing gaskets incurred according to other parameters, the depth of groove can be equivalent to or larger than the thickness of the sealing gaskets 15, 25, so that the sealing gaskets 15, 25 are embedded in the groove. The interference or relationship of interference between the orifice threads and the molded gasket is managed by adjusting the outer diameter of the gasket. The engagement interference can be increased by molding a larger outside diameter gasket. Engagement or torque is based on durometer of the gasket material. A higher durometer rating creates a harder gasket and therefore requires more torque to engage the bolt.

In the present invention, the gasket is mounted at the thread portion of the anti-vibration bolt. It is well known in this field that the threads of an anti-vibration bolt and threads of a nut or threaded hole for matching with the anti-vibration bolt must torque "against" each other to create torque or tightness to hold the anti-vibration bolt in place. By setting the gasket at the thread portion of the anti-vibration bolt, torque is created before creating addition torque from the two apposing metal threads pulling against one another. The gasket alone can create an estimated 2.2 kg-m (16 foot pounds) of torque, understanding the prevailing torque can be adjusted with different gasket material compositions and materials.

According to the present invention, the gasket is molded into the thread to increase torque without traditional torque created from the thread engagement. This results in internal vibration absorption, dramatically reducing the risk of self-loosening or unscrewing of the bolt. If the gaskets are engaged and compressed, it is less likely that vibration will turn the bolt counter clockwise or outwards until it becomes so loose to the point of bolt un-installment, hence prevents fluids to leak out in an uncontrolled manner. The sealing function of the gasket will aid the sealing of threads due to "cockeyed", misalignment, over tightening, stripping, created vibration, non-correct installation, and/or wear. The present invention can realize a vibration-stopping function which is a fail-safe mechanism in case installation technicians neglect to properly fix or torque the bolt until the end.

The subject anti-vibration bolt may be made by conventional polymer or metal molding, rolling, cold-heading, and machining methods. Preferably, the anti-vibration bolt is threaded by conventional methods. After threading the body portion, the groove/grooves may then be defined in the body portion. The groove(s) being defined after the threads allow the thread portion not to be shifted, and therefore the threads will align in the threaded socket as they normally would. Alternatively, the groove(s) may be defined in the body portion first, followed by the threads being machined in the body portion. Further, the subject anti-vibration bolt can be made of any material, such as metal and polymer. If adopting polymer anti-vibration bolt, it will reduce weight and wear to the fluid outlet threads. In the present invention, the anti-vibration bolt can be configured with a body portion and a head portion as described above, or can be configured with only the body portion with threads, or can be configure with a body portion and a head portion without the flange portion defined therebetween.

It should be understood that the examples and embodiments described herein are for illustrative purposes only and that various modifications would be contemplated by persons skilled in the art whilst remaining within the scope of the invention as defined by the claims.

## Claims

1. An anti-vibration bolt (10, 20) comprising:
a body portion, said body portion (13, 23) comprising a thread portion (14, 24), and
a cross-wise recess defined on the thread portion,
**characterised in that** the anti-vibration bolt further comprises a cross-wise sealing gasket (15) which is capable of expanding and is mounted in said cross-wise recess.

2. The anti-vibration bolt of claim 1, wherein the cross-wise recess comprises at least two grooves connected at at least one connection point, the cross-wise sealing gasket corresponds to the cross-wise recess so that the cross-wise sealing gasket can be mounted in said cross-wise recess.

3. The anti-vibration bolt of claim 2, wherein at least one groove of the cross-wise recess intersects the cross-section of the body portion.

4. The anti-vibration bolt of any of the preceding claims, wherein the depth of the one or more recesses are selectable such that the sealing gasket mounted therein is either flush, below or protruding with respect to the threads.

5. The anti-vibration bolt of any of the preceding claims, wherein the contour of the first and/or second sealing gaskets can be changed when the first and/or second sealing gaskets are compressed or contacted with fluids or heat.

6. The anti-vibration bolt of any of the preceding claims, further comprising a head portion (11, 21) connecting with the body portion.

7. The anti-vibration bolt of claim 6, wherein a marking portion is set on a surface of the head portion.

## Patentansprüche

1. Antivibrationsschraube (10, 20), umfassend:
einen Körperabschnitt, wobei der Körperabschnitt (13, 23) einen Gewindeabschnitt (14, 24) umfasst, und
eine am Gewindeabschnitt definierte kreuzweise Aussparung,
**dadurch gekennzeichnet, dass** die Antivibrationsschraube ferner eine kreuzweise Dichtung (15) umfasst, die expandieren kann und in der kreuzweisen Aussparung montiert ist.

2. Antivibrationsschraube nach Anspruch 1, wobei die kreuzweise Aussparung mindestens zwei Rillen umfasst, die an mindestens einem Verbindungspunkt verbunden sind, wobei die kreuzweise Dichtung mit der kreuzweisen Aussparung so korrespondiert, dass die kreuzweise Dichtung in der kreuzweisen Aussparung montiert werden kann.

3. Antivibrationsschraube nach Anspruch 2, wobei mindestens eine Rille der kreuzweisen Aussparung den Querschnitt des Körperabschnitts schneidet.

4. Antivibrationsschraube nach einem der vorhergehenden Ansprüche, wobei die Tiefe der einen oder mehreren Aussparungen selektierbar ist, sodass die darin montierte Dichtung in Bezug auf die Gewinde entweder bündig, darunter oder vorspringend ist.

5. Antivibrationsschraube nach einem der vorhergehenden Ansprüche, wobei die Kontur der ersten und/oder zweiten Dichtungen geändert werden kann, wenn die ersten und/oder zweiten Dichtungen zusammengedrückt oder mit Flüssigkeiten oder Hitze kontaktiert werden.

6. Antivibrationsschraube nach einem der vorhergehenden Ansprüche, ferner umfassen einen Kopfabschnitt (11, 21), der mit dem Körperabschnitt verbunden ist.

7. Antivibrationsschraube nach Anspruch 6, wobei ein Markierungsabschnitt an einer Oberfläche des Kopfabschnitts gesetzt ist.

## Revendications

1. Boulon anti-vibration (10, 20) comprenant :
une portion de corps, ladite portion de corps (13, 23) comprenant une portion de filet (14, 24) et un évidement transversal défini sur la portion de filet,
**caractérisé en ce que** le boulon anti-vibration comprend en outre une garniture d'étanchéité transversale (15) qui est à même de se dilater et est disposée dans ledit évidement transversal.

2. Boulon anti-vibration selon la revendication 1, dans lequel l'évidement transversal comprend au moins deux rainures raccordées en au moins un point de jonction, la garniture d'étanchéité transversale correspondant à l'évidement transversal de sorte que la garniture d'étanchéité transversale puisse être disposée dans ledit évidement transversal.

3. Boulon anti-vibration selon la revendication 2, dans lequel au moins une rainure de l'évidement transversal coupe la section transversale de la portion de corps.

4. Boulon anti-vibration selon l'une quelconque des revendications précédentes, dans lequel la profondeur des un ou plusieurs évidements est sélectionnable de sorte que la garniture d'étanchéité qui y est disposée soit de niveau, rentrée ou saillante par rapport aux filets.

5. Boulon anti-vibration selon l'une quelconque des revendications précédentes, dans lequel le contour de la première et/ou de la seconde garniture d'étanchéité peut être modifié lorsque la première et/ou la seconde garniture d'étanchéité est ou sont comprimées ou mise(s) en contact avec des fluides ou de la chaleur.

6. Boulon anti-vibration selon l'une quelconque des revendications précédentes, comprenant en outre une portion de tête (11, 21) se raccordant à la portion de corps.

7. Boulon anti-vibration selon la revendication 6, dans lequel une portion de marquage est calée sur une surface de la portion de tête.
